# EUROPEAN PATENT APPLICATION

(11) **EP 1 806 646 A2**
(43) Date of publication of application: **11.07.2007**
(21) Application number: 06122486.1
(22) Date of filing: 18.10.2006
(51) Int. Cl.: G06F 1/32

(54) **Portable electronic apparatus and power save control method**

(30) Priority: 30.11.2005 JP 2005345908
(71) Applicant: KABUSHIKI KAISHA TOSHIBA, Tokyo 105-8001 (JP)
(72) Inventor: Ono, Yukiya, Intellectual Property Division Toshiba Corporation, Tokyo 105-8001 (JP)
(74) Representative: Henkel, Feiler & Hänzel

(57) **Abstract**

A portable electronic apparatus permitted to be powered by a battery and including a function for reproducing contents data acquired by multiplexing and encoding video data and audio data, includes a separation unit (104) which separates the contents data into the video data and the audio data, a video decoder (105) which receives and decodes the video data separated by the separation unit, an audio decoder (106) which receives and decodes the audio data separated by the separation unit, a setting unit (101) which sets a power saving mode in which only the audio data included in the contents data is reproduced, and a power save control unit (102) which causes the video decoder to stop decoding of part of the video data when the power saving mode is set by the setting unit, the part of the video data being for use other than menu display.

## Description

One embodiment of the invention relates to a power saving technique suitable for, for example, a notebook personal computer that can be powered by a battery.

In accordance with the recent progress of compression/encoding and image processing techniques, recording/reproducing of movies and music video programs as digital data has come to be generally carried out, using, for example, personal computers.

Many personal computers of this type are carried by a user and powered by a battery. Battery-powered personal computers enable users to enjoy movies or music video programs anywhere they visit, and anytime even when on the move.

For portable electronic apparatuses including such battery-powered personal computers, various methods for reducing power consumption have been proposed to power them as long as possible by batteries (see, for example, Jpn. Pat. Appln. KOKAI Publication No. 2005-218006). In the portable digital broadcasting receiver apparatus disclosed in Jpn. Pat. Appln. KOKAI Publication No. 2005-218006, to reduce power consumption, the audio decoding unit is deactivated in the mode of outputting only video data, while the video decoding unit and display device are deactivated in the mode of outputting only audio data.

Assume here that music video data recorded on a digital versatile disk (DVD) is reproduced by a battery-powered personal computer. At this time, when the user thinks that they do not need images to enjoy the music, they can enjoy the music for longer by selecting the mode of outputting only audio data.

However, with many DVDs, a menu is displayed to enable a user to operate it, and reproduce is performed in accordance with the menu selection. Therefore, even where the user wants to enjoy only music without images, control of simply deactivating the video decoding unit and display device cannot be performed.

The present invention has been developed in light of the above, and aims to provide a portable electronic apparatus capable of reducing power consumption when reproducing the contents data acquired by multiplexing and encoding video data and audio data, and also to provide a power save control method employed in such apparatuses.

To satisfy the aim, there is provided a portable electronic apparatus permitted to be powered by a battery and including a function for reproducing contents data acquired by multiplexing and encoding video data and audio data, characterized by comprises separation means for separating the contents data into the video data and the audio data, video decoding means for receiving and decoding the video data separated by the separation means, audio decoding means for receiving and decoding the audio data separated by the separation means, setting means for setting a power saving mode in which only the audio data included in the contents data is reproduced, and power save control means for causing the video decoding means to stop decoding of part of the video data when the power saving mode is set by the setting means, the part of the video data being for use other than menu display.

The invention can provide a portable electronic apparatus capable of reproducing, at low consumption power, contents data acquired by multiplexing and encoding video data and audio data, and a power saving control method employed in such apparatuses.

The invention can be more fully understood from the following detailed description when taken in conjunction with the accompanying drawings, in which:
FIG. 1 is an exemplary perspective view illustrating a state of a notebook personal computer according to an embodiment of the invention, in which its display unit is open;
FIG. 2 is an exemplary block diagram illustrating the configuration of the computer of the embodiment;
FIG. 3 is an exemplary block diagram illustrating a content reproducing application program executed in the computer;
FIG. 4 is an exemplary flowchart illustrating the procedure of an operation performed by the computer during reproducing recorded data;
FIG. 5 is an exemplary flowchart illustrating the procedure of an operation performed, when reproducing recorded data, concerning the opening/closing of the display unit of the computer; and
FIG. 6 is an exemplary flowchart illustrating the procedure of another operation (modification) performed by the computer when reproducing recorded data.

Various embodiments according to the invention will be described hereinafter with reference to the accompanying drawings.

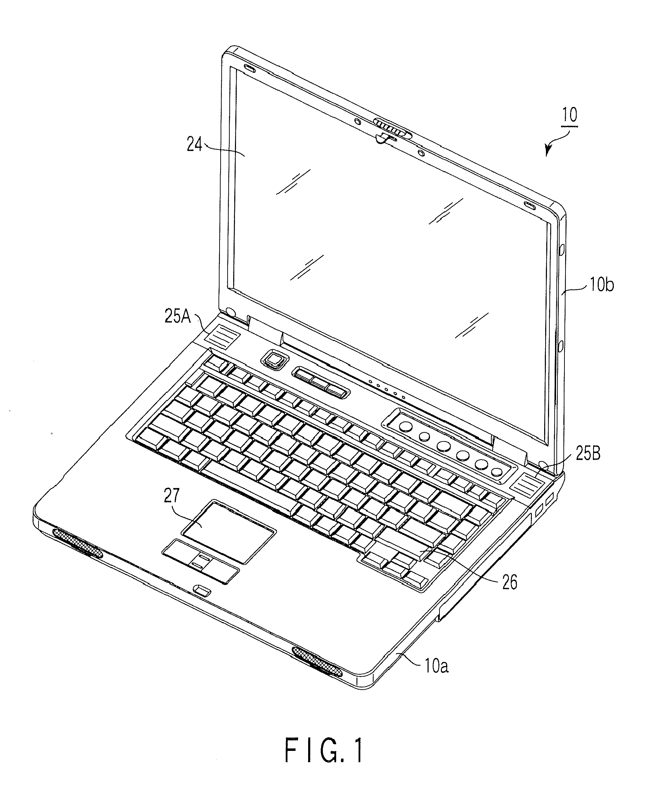

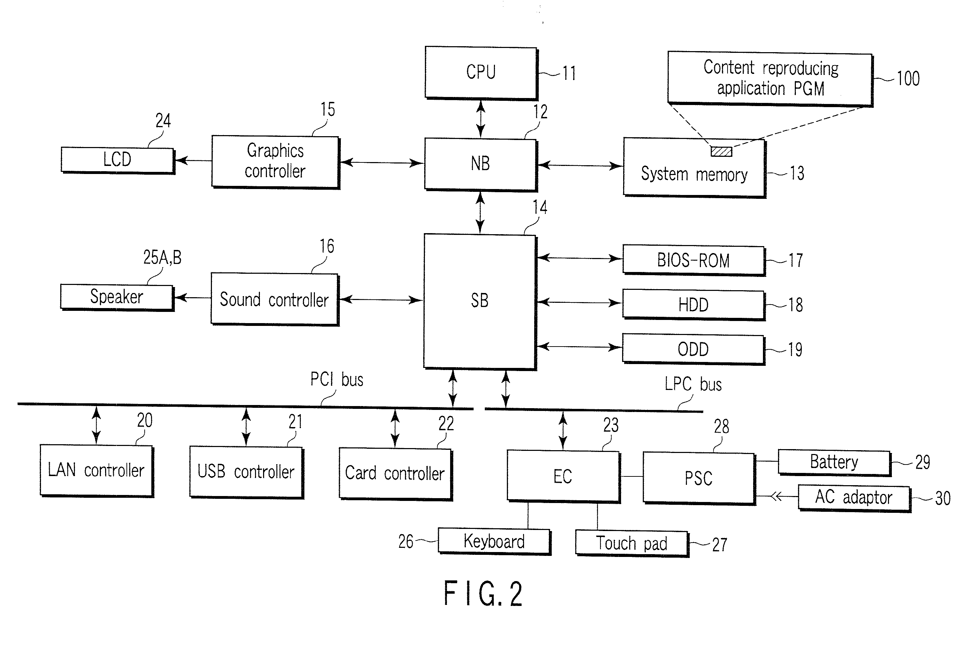

Referring first to FIGS. 1 and 2, the configuration of a portable electronic apparatus according to the embodiment will be described. The portable electronic apparatus is realized as, for example, a notebook personal computer 10.

FIG. 1 is an exemplary perspective view illustrating a state of the personal computer 10, in which its display unit is open. As shown, the computer 10 comprises a computer main unit 10a and display unit 10b. The display unit 10b incorporates a thin film transistor liquid crystal display (TFT-LCD) 24. The display screen of the LCD 24 is located at substantially the center of the display unit 10b.

The display unit 10b is angularly movably attached to the computer main unit 10a so that it is movable between an open position and closed position. The computer main unit 10a has a thin rectangular case, and includes a keyboard 26, touch pad 27 and speakers 25A and 25B, etc., on the upper surface of the case.

Referring then to FIG. 2, the configuration of the computer 10 will be described.

As shown in FIG. 2, the computer 10 comprises a CPU 11, north bridge (NB) 12, system memory 13, south bridge (SB) 14, graphics controller 15, sound controller 16, BIOS-ROM 17, hard disk drive (HDD) 18, optical disk drive (ODD) 19, LAN controller 20, universal serial bus (USB) controller 21, card controller 22 and embedded controller (EC) 23.

The CPU 11 is a processor for controlling the operation of the computer 10, and executes various programs, such as an operating system and content reproducing application program 100, loaded from the HDD 18 to the system memory 13. The CPU 11 also executes a basic input output system (BIOS) stored in the BIOS-ROM 17. The BIOS is a program for hardware control.

The NB 12 is a bridge device that connects the local bus of the CPU 11 to the SB 14. The NB 12 contains a memory controller for controlling accesses to the system memory 13. The NB 12 also has a function for communicating with the graphics controller 15 via an accelerated graphics port (AGP) bus or a serial bus of the PCI express standards.

The graphics controller 15 is a display controller for controlling the LCD 24 used as the display monitor of the computer 10.

The SB 14 controls each device on a low pin count (LPC) bus and on a peripheral component interconnect (PCI) bus. Further, the SB 14 contains an integrated drive electronics (IDE) controller for controlling the HDD 18 and ODD 19, and has a function for communicating with the sound controller 16.

The sound controller 16 is a sound source device, and outputs, to the speakers 25A and 25B, audio data corresponding to a sound to be reproduced. A connector (not shown) for a headphone is provided on one side of the computer main unit 10a of the computer 10. When the jack of the headphone is inserted in the connector, the sound controller 16 outputs a music signal to the connector, instead of outputting it to the speakers 25A and 25B. Since the connector is provided on one side of the computer main unit 10a, the user can enjoy music through the headphone with the display unit 10b closed (for example, when the computer 10 is carried, contained in a bag).

The LAN controller 20 is a communication device for executing communication of, for example, the Ethernet® standards. The USB controller 21 executes serial communication of, for example, the USB2.0 standards with peripheral devices. The card controller 22 controls a PC card, secure digital (SD) card, etc. The EC 23 is a one-chip microcomputer formed of an embedded controller for power management, and a keyboard controller for controlling the keyboard 26 and touch panel 27. The EC 23 also has a function for controlling a power supply controller (PSC) 28 for supplying power to each element of the computer 10. The PSC 28 has a function for supplying power from a battery 29 or AC adaptor 30 to each element of the computer 10, and a function for charging the battery 29 with the power from the AC adaptor 30. Whether power is supplied from the AC adaptor 30 (i.e., whether the AC adaptor 30 is connected is always reported from the PSC 28 to the EC 23.

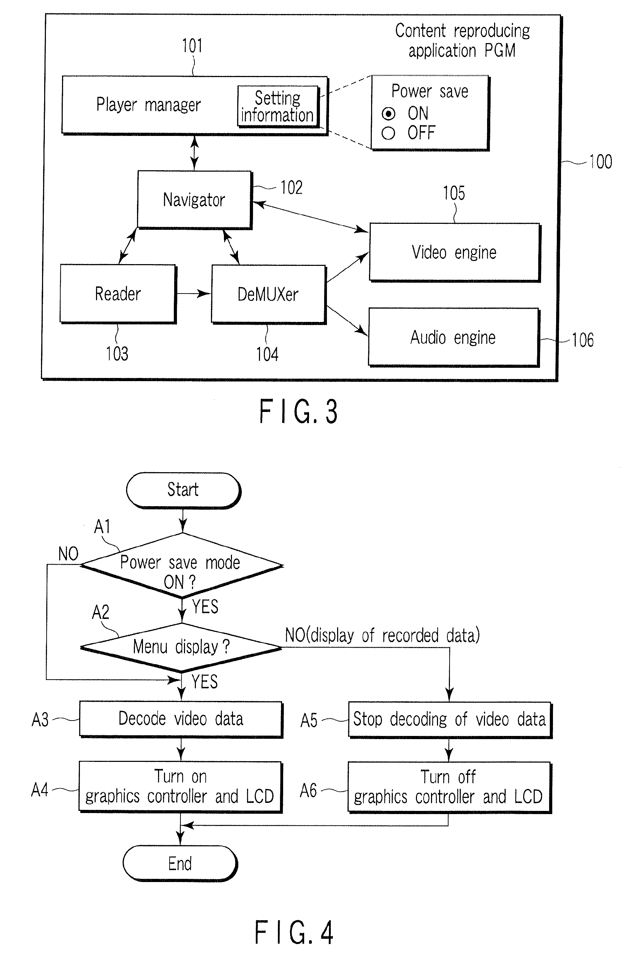

Referring then to FIG. 3, a description will be given of the configuration of the content reproducing application program 100 executed in the computer 10 constructed as the above. FIG. 3 is an exemplary block diagram useful in explaining the function of the content reproducing application program 100.

The content reproducing application program 100 is software for operating the computer 10 as a reproducing apparatus for reproducing the contents data recorded on, for example, a digital versatile disk (DVD) set in the ODD 19. As shown in FIG. 3, the program 100 includes a player manager 101, navigator 102, reader 103, deMUXer 104, video engine 105 and audio engine 106.

The player manager 101 controls the entire operation of the content reproducing application program 100, and has a user interface function for receiving instructions from the user. As part of the user interface function, the player manager 101 enables the user to select whether reproducing of recorded data should be executed in a power saving mode (i.e., whether power saving should be ON or OFF), described later, when the computer is powered by the battery. The player manager 101 manages the selected data as setting data.

The navigator 102 substantially controls the processing related to the reproducing of recorded data, based on an instruction from the player manager 101. More specifically, the navigator 102 causes the reader 103 to read, from, for example, a DVD set in the ODD 19, the data acquired by multiplexing and encoding video data and audio data, and causes the deMUXer 104 to separate the read data into video data and audio data. The navigator 102 further causes the video engine 105 to decode and output the video data acquired by the separation, and causes the audio engine 106 to decode and output the audio data acquired by the separation.

The contents data read from, for example, the DVD includes an information section and video object section. The navigator 102 refers to the information contained in the information section to grasp the whole structure of the contents data recorded on the DVD. The video object section contains the video data and audio data multiplexed, encoded and divided into preset units. Each unit holds a header as attribute information. The attribute information includes, for example, information that identifies the video data is for the display of a menu or for the main body.

Assume here that the user who carries the computer 10 has performed setting for causing the computer to reproduce contents data in a power saving mode. When the power saving mode is set, the computer 10 reproduces only audio data from the DVD set in the ODD 19. Namely, the computer 10 executes control for users who do not need display of images and do want to enjoy only the music recorded on the DVD, if the powering period of the battery 29 is elongated (i.e., control for the users who think it sufficient if they can replay the DVD like a CD).

As described above, the player manager 101 manages whether the power saving mode is set. If the mode is set, this is reported from the player manager 101 to the navigator 102. Upon receiving the report, the navigator 102 instructs the video engine 105 to decode only the video data determined to be dedicated to menu display from attribute information held as a header, and not to decode the other video data. Upon receiving the instruction, if the video data from the deMUXer 104 is not for menu display, the video engine 105 stops decoding and supplies the EC 23 an instruction to stop the supply of power to the graphics controller 15 and LCD 24.

Namely, in the computer 10, when music video data is reproduced from a DVD in the power saving mode, display control to display the menu necessary for each operation and not to display the main body to be displayed after the menu is automatically performed. As a result, reduction of consumption power caused by a reduction in the load of the CPU due to the stop of decoding, and the reduction of consumption power due to the turn off of the graphics controller 15 and LCD 24 are realized, which enables the reproducing of the contents data using the battery 29 to be enjoyed for a longer time.

FIG. 4 is an exemplary flowchart illustrating the procedure of an operation performed by the computer when reproducing contents data.

When reproducing contents data, the computer 10 determines whether the power saving mode is set (block A1). If it is set (Yes at block A1), the computer 10 determines whether video data as a reproducing target is for menu display (block A2).

If the power saving mode is not set (No at block A1), or if the video data is for menu display (Yes at block A2), the computer 10 decodes the video data using the video engine 105 (block A3), and turns on the LCD 24 and graphics controller 15 (block A4).

In contrast, if the power saving mode is set, and if the video data is not for menu display (No at block A2), the computer 10 stops the decoding of the video data by the video engine 105 (block A5), and turns off the LCD 24 and graphics controller 15 (block A6).

As described above, since a connector for a headphone is provided on a side of the computer main unit 10a, music can be enjoyed using the headphone with the display unit 10b closed. In this case, the LCD 24 of the display unit 10b is not seen. Accordingly, it is preferable to stop decoding to thereby reduce the load of the CPU, and to turn off the graphics controller 15 and LCD 24, regardless of whether the power saving mode is set, in order to reduce the power consumption.

By doing this, after the necessary menu operation, it is possible to shift the computer 10 to the power saving mode simply by closing the display unit 10b, without performing the power saving mode-setting process.

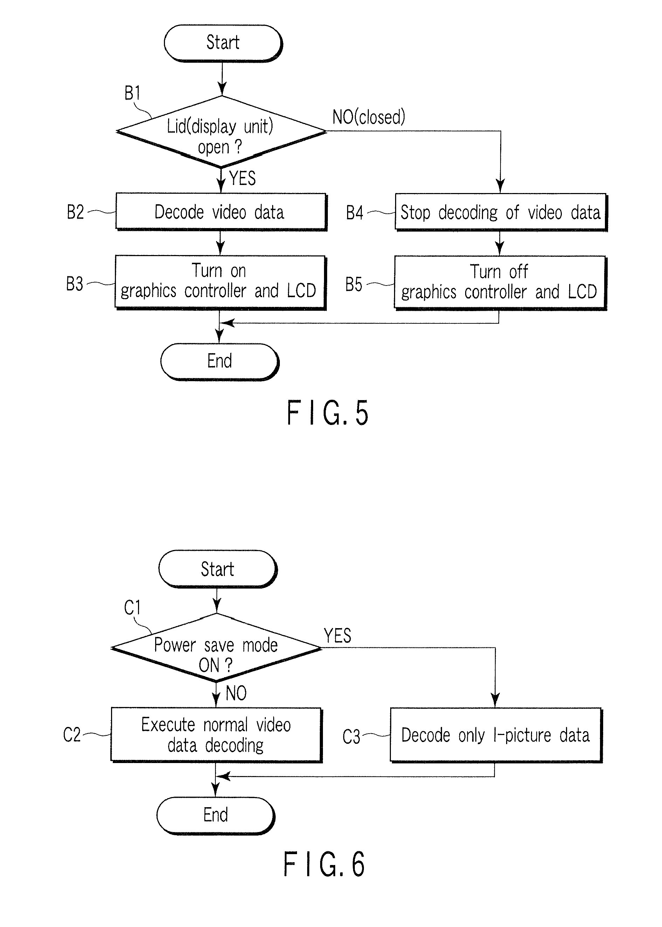

FIG. 5 is an exemplary flowchart illustrating the procedure of an operation performed, when reproducing contents data, concerning the opening/closing of the display unit of the computer.

When reproducing contents data, the computer 10 determines whether the display unit 10b is open (block B1). If the display unit 10b is open (Yes at block B1), the computer 10 decodes video data using the video engine 105 (block B2), and turns on the LCD 24 and graphics controller 15 (block B3). Blocks B2 and B3 are executed not only when the display unit 10b is kept open from the beginning of use, but also when the closed display unit 10b is opened. Therefore, if the power saving mode is not set, image output is resumed when the display unit 10b is opened.

On the other hand, if the display unit is closed (No at block B1), the computer 10 stops the decoding of video data by the video engine 105 (block B4) and turns off the LCD 24 and graphics controller 15 (block B5).

As described above, the computer 10 performs control for reducing the power consumption during reproducing contents data, in accordance with the opening/closing operation of the display unit 10b.

In the above embodiment, when the power saving mode is set, the decoding of video data by the video engine 105 is stopped to reduce the load of the CPU. However, instead of totally stopping the decoding of video data, video data may be thinned before decoding, and the resultant video data is decoded. Also in this case, the load of the CPU can be reduced to thereby lengthen the duration time of the battery 29. For instance, when video data is compressed and encoded by MPEG as major standards, the thinning is realized by, for example, decoding only I-picture data. FIG. 6 is an exemplary flowchart illustrating the procedure of another operation (modification) performed by the computer when reproducing contents data.

When reproducing contents data, the computer 10 determines whether the power saving mode is set (block C1). If the mode is not set (No at block C1), the computer 10 performs normal decoding using the video engine 105 (block C2). If the mode is set (Yes at block C1), the computer 10 decodes thinned data using the video engine 105 (block C3).

Further, in the above embodiment, the supply of power to the graphics controller 15 and LCD 24 is interrupted when the power saving mode is set or the display unit 10b is closed. However, the same advantage (reduction of power consumption) as in the case of turning off the LCD 24 can be acquired also when the brightness of video data to be output to the LCD 24 is set 0.

## Claims

1. A portable electronic apparatus permitted to be powered by a battery and including a function for reproducing contents data acquired by multiplexing and encoding video data and audio data, **characterized by** comprising:
separation means (104) for separating the contents data into the video data and the audio data;
video decoding means (105) for receiving and decoding the video data separated by the separation means;
audio decoding means (106) for receiving and decoding the audio data separated by the separation means;
setting means (101) for setting a power saving mode in which only the audio data included in the contents data is reproduced; and
power save control means (102) for causing the video decoding means to stop decoding of part of the video data when the power saving mode is set by the setting means, the part of the video data being for use other than menu display.

2. The portable electronic apparatus according to claim 1, **characterized by** further comprising a display means (15) which displays the video data, and
the power save control means causes the display means to display no data, when stopping the decoding of the part of the video data.

3. The portable electronic apparatus according to claim 2, **characterized in that**:
the display unit is a liquid crystal display; and
the power save control means sets brightness of the liquid crystal display to 0 to cause the liquid crystal display to display no data.

4. The portable electronic apparatus according to claim 2, **characterized in that**:
the display means is provided on an inner side of a lid section openably/closably attached to a main unit of the portable electronic apparatus; and
the power save control means causes the video decoding means to stop the decoding of the part of the video data and causes the display means to display no data, regardless of whether the power saving mode is set, when the lid section is closed during reproducing the contents data.

5. The portable electronic apparatus according to claim 4, **characterized in that** the power save control means causes the video decoding means to resume the decoding and causes the display means to display the video data, when the lid section is opened during reproducing the contents data and the setting means does not set the power saving mode.

6. A portable electronic apparatus permitted to be powered by a battery and including a function for reproducing contents data acquired by multiplexing and encoding video data and audio data, **characterized by** comprising:
separation means (104) for separating the contents data into the video data and the audio data;
video decoding means (105) for receiving and decoding the video data separated by the separation means;
audio decoding means (106) for receiving and decoding the audio data separated by the separation means;
setting means (101) for setting a power saving mode in which the video data included in the contents data is thinning-out reproduced; and
a power save control means (102) for causing the video decoder to thin the video data before decoding, when the power saving mode is set by the setting means.

7. A power save control method of a portable electronic apparatus which is permitted to be powered by a battery and includes a function for reproducing contents data acquired by multiplexing and encoding video data and audio data, **characterized by** comprising:
stopping (A5) decoding of part of the video data when a power saving mode in which only the audio data included in the contents data is reproduced is set, the part of the video data being for use other than menu display.

8. The power save control method according to claim 7, **characterized by** further comprising causing (A6) a display unit used to display the video data to display no video data, when stopping the decoding of the part of the video data.

9. The power save control method according to claim 8, **characterized in that**:
the display unit is a liquid crystal display; and
the causing the display unit to display no video data sets brightness of the liquid crystal display to 0 to display no data.

10. The power save control method according to claim 8, **characterized in that**:
the display unit is provided on an inner side of a lid section openably/closably attached to a main unit of the portable electronic apparatus; and
the stopping decoding of part of the video data stops (B4) the decoding of the part of the video data and the causing the display unit to display no data causes (B5) the display unit to display no data, regardless of whether the power saving mode is set, when the lid section is closed during reproducing the contents data.

11. The power save control method according to claim 10, **characterized by** further comprising resuming (B2) the decording and causing (B3) the display unit to display the video data, when the lid section is opened during reproducing the contents data, and the power saving mode is not set.
